# DEMANDE DE BREVET EUROPEEN

(11) **EP 1 254 794 A1**
(43) Date de publication de la demande: **06.11.2002**
(21) Numéro de dépôt: 02009421.5
(22) Date de dépôt: 25.04.2002
(51) Int. Cl.: B60H 1/00

(54) **Dispositif de recyclage de l'air d'un habitacle de véhicule**

(30) Priorité: 04.05.2001 FR 0105986
(71) Demandeur: VALEO CLIMATISATION, 78321 La Verrière (FR)
(72) Inventeur: Elliot, Gilles, 91080 Courcouronnes (FR)

(57) **Abrégé**

L'invention concerne un dispositif de conditionnement de l'air d'un habitacle (3) de véhicule automobile, comportant un appareil (5) de conditionnement d'air installé à l'avant de la planche de bord (1), susceptible d'être alimenté en air extérieur et/ou en air de recyclage prélevé dans l'habitacle et transitant par un conduit de recyclage (9) disposé dans la planche de bord (1), et susceptible de délivrer un débit d'air conditionné dans un conduit de délivrance (18) d'air reliant ledit appareil (5) à la zone arrière (19) de l'habitacle (3),
caractérisé par le fait qu'il est prévu dans la planche de bord (1) un conduit de dérivation (21) reliant ledit conduit de recyclage (9) audit conduit de délivrance (18), ledit conduit de dérivation (21) partageant le conduit de délivrance (18) en une portion amont (18a) située entre l'appareil (5) et l'embranchement (23) du conduit de dérivation (21) et en une portion aval (18b) située entre ledit embranchement (23) et la bouche de délivrance, et dans ledit embranchement (23) un volet (22) de recyclage arrière susceptible de prendre au moins deux positions, une première position (P1) dans laquelle il obture l'entrée (24) du conduit de dérivation (21) et une deuxième position (P2) dans laquelle il obture la sortie (25) de la portion amont (18a) du conduit de délivrance (18), afin de permettre un prélèvement d'air dans la zone arrière (19) de l'habitacle (3) pour recyclage.

## Description

L'invention se rapporte, de manière générale, à un dispositif de conditionnement d'air pour véhicules automobiles.

Elle concerne plus précisément un dispositif de conditionnement de l'air d'un habitacle de véhicule automobile, comportant un appareil de conditionnement d'air installé à l'avant de la planche de bord, susceptible d'être alimenté en air extérieur et/ou en air de recyclage prélevé dans l'habitacle et transitant par un conduit de recyclage disposé dans ladite planche de bord, et susceptible de délivrer un débit d'air conditionné dans la zone arrière et l'habitacle grâce à un conduit de délivrance reliant ledit appareil à une bouche de délivrance.

Certains dispositifs de conditionnement d'air comportent en effet un volet d'alimentation qui, dans une position particulière dite de recyclage, permet d'alimenter l'habitacle du véhicule en circuit fermé ou quasi fermé. Ce mode de fonctionnement est particulièrement utilisé lorsque le véhicule traverse des zones polluées. Ce mode de fonctionnement est également utile par temps très froid, au démarrage du véhicule, afin de permettre un chauffage plus rapide du véhicule, et également lorsque l'air extérieur est très chaud, afin de permettre des économies d'énergie. Dans la quasi-totalité des véhicules équipés de moyens de recyclage, la prise d'air de recyclage est disposée dans la planche de bord.

EP 0 645 267 décrit un dispositif de conditionnement d'air pour véhicules automobiles dans lequel la prise d'air de recyclage se trouve dans la zone arrière de l'habitacle et le conduit de recyclage est disposé en partie dans le plancher de l'habitacle. Mais ce dispositif décrit dans ce document ne comporte pas de conduit de délivrance d'air conditionné vers la zone arrière de l'habitacle.

Dans les véhicules comportant une bouche de délivrance d'air dans la zone arrière de l'habitacle, le conduit correspondant de délivrance d'air est disposé en général dans le plancher de l'habitacle et l'air délivré circule de l'appareil de conditionnement vers la bouche de délivrance.

Le but de l'invention est de proposer un dispositif de conditionnement tel que mentionné en introduction, qui permette de prendre, à la demande, l'air de recyclage dans la zone arrière de l'habitacle.

Selon l'invention, le dispositif est caractérisé par le fait qu'il est prévu, dans la planche de bord, un conduit de dérivation reliant ledit conduit de recyclage audit conduit de délivrance, ledit conduit de dérivation partageant le conduit de délivrance en une portion amont située entre l'appareil et l'embranchement du conduit de dérivation et en une portion aval située entre ledit embranchement et la bouche de délivrance et, dans ledit embranchement, un volet de recyclage arrière susceptible de prendre au moins deux positions, une première position dans laquelle il obture l'entrée du conduit de dérivation, et une deuxième position dans laquelle il obture la sortie de la portion amont du conduit de délivrance, afin de permettre un prélèvement d'air dans la zone arrière de l'habitacle pour recyclage.

Ainsi, de l'air conditionné issu de l'appareil circule dans la portion aval du conduit de délivrance lorsque le volet de recyclage arrière est dans la première position, et de l'air prélevé dans la zone arrière de l'habitacle circule dans le sens inverse dans cette portion aval lorsque le volet de recyclage arrière est dans la deuxième position.

Avantageusement, le volet de recyclage arrière peut prendre une troisième position dans laquelle il met la portion amont en communication avec le conduit et dérivation.

Cette disposition permet dans les conditions extrêmes de réinjecter dans le conduit de recyclage de l'air plus froid ou plus chaud afin de diminuer ou d'augmenter plus rapidement la température de l'air sortant des bouches de diffusion prévues dans la planche de bord.

D'autres avantages et caractéristiques de l'invention ressortiront à la lecture de la description suivante faite à titre d'exemple et en référence aux dessins annexés, dans lesquels :

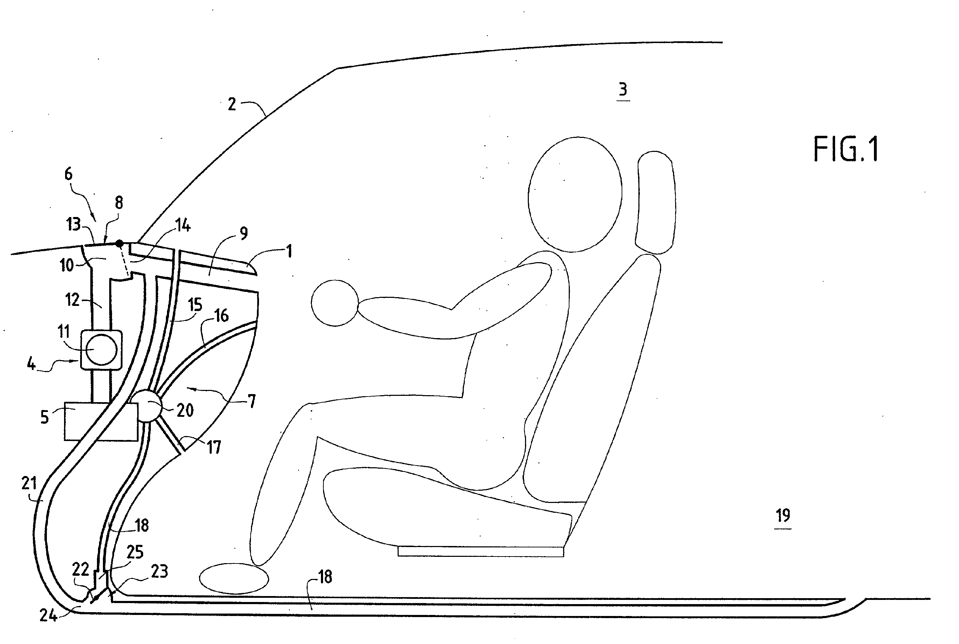

- la figure 1 est une coupe schématique longitudinale de l'habitacle et de la planche de bord d'un véhicule automobile équipé d'un dispositif de conditionnement d'air conforme à l'invention ;
- les figures 2 à 4 montrent les différentes positions que peut prendre le volet de recyclage arrière du dispositif de conditionnement de la figure 1.

La référence 1 représente une planche de bord d'un véhicule automobile disposée à l'arrière d'un pare-brise 2 et à l'avant de l'habitacle 3.

Le véhicule est équipé d'un dispositif de conditionnement d'air 4 qui comprend essentiellement un appareil de conditionnement 5 disposé dans la planche de bord 1, un circuit d'alimentation en air 6 et un faisceau 7 de conduits de délivrance d'air vers l'habitacle 3. Le circuit d'alimentation en air 6 comporte une bouche d'entrée d'air extérieur 8, un conduit de recyclage 9 d'air disposé dans la planche de bord 1 et reliant l'habitacle 3 à une chambre d'entrée d'air 10 et un dispositif d'aspiration d'air 11 disposé dans un conduit d'entrée 12 entre la chambre 10 et l'appareil de conditionnement 5. Un volet de répartition 13 disposé dans la chambre d'entrée 10 permet de commander l'alimentation en air du dispositif d'aspiration 11 soit à partir de l'extérieur avec de l'air entrant par la bouche 8 dans la chambre d'entrée 10, soit à partir de l'habitacle 3 avec de l'air provenant du conduit de recyclage 9. Le volet de répartition est mobile entre, d'une part, une première position dite ouverte dans laquelle il obture la sortie 14 du conduit de recyclage, de sorte que la quasi-totalité de l'air entrant dans l'appareil de conditionnement provient de l'extérieur et, d'autre part, une deuxième position dite fermée dans laquelle il obture la bouche d'entrée 8, de sorte que la quasi-totalité de l'air aspiré provient de l'habitacle 3 via le conduit de recyclage 9.

Le faisceau 7 de conduits de délivrance comporte essentiellement un conduit de dégivrage 15, un conduit d'aération avant 16, un conduit de chauffage ou ventilation 17 de la zone inférieure avant de l'habitacle 3 et un conduit de délivrance 18 d'air conditionné vers la zone arrière 19 inférieure de l'habitacle 3.

Ces différents conduits 15 à 18 sont alimentés sélectivement par un boîtier de distribution 20 de l'appareil de conditionnement 5.

Un tel dispositif de conditionnement est connu et ne nécessite pas d'autres explications.

Selon l'invention, un conduit de dérivation 21 relie le conduit de délivrance 18 au conduit de recyclage 9. Un volet 22 de recyclage arrière est prévu à l'embranchement 23 du conduit de dérivation 21 et du conduit de délivrance 18. Le conduit de délivrance 18 est ainsi partagé en deux portions de conduit, à savoir, une portion amont 18a reliant le boîtier de distribution 20 à l'embranchement 23 et une portion aval 18b reliant l'embranchement 23 à la zone arrière 19 de l'habitacle 3.

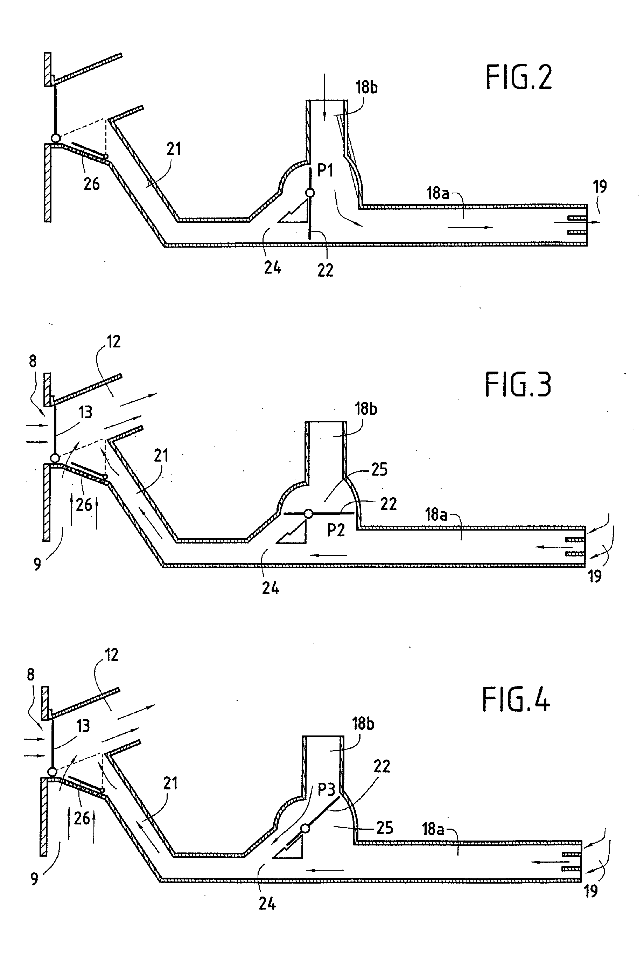

Le volet de recyclage 12 peut prendre trois positions ainsi que cela est montré sur les figures 2 à 4.

Dans la première position P1, montrée sur la figure 2, le volet 22 de recyclage arrière obture l'entrée 24 du conduit de dérivation 21.

Aucun air ne peut transiter par le conduit de dérivation 21. L'air conditionné délivré par le boîtier de distribution 20 vers le conduit de délivrance 18 débouche alors dans la zone arrière 19 de l'habitacle 3.

Dans la deuxième position P2, montrée sur la figure 3, le volet 22 de recyclage arrière obture la sortie 25 de la portion amont 18a du conduit de délivrance 18. La portion aval 18b est alors en communication avec le conduit de recyclage 9, via le conduit de dérivation 21. Dans le cas où le dispositif d'aspiration d'air 11 prélève de l'air de recyclage via le conduit de recyclage 9, le volet de répartition 13 obturant la bouche 8 d'entrée d'air extérieur, une partie au moins de l'air de recyclage sera prélevée dans la zone arrière 19 de l'habitacle 3.

Dans la troisième position P3, montrée sur la figure 4, le volet 22 de recyclage arrière est positionné de telle manière que la portion amont 18a et la portion aval 18b du conduit de délivrance 18 sont mis en communication avec le conduit de dérivation 21. Dans cette position, l'air conditionné délivrée par la portion amont 18a est entièrement recyclé par le dispositif d'aspiration d'air 11.

La référence 26 désigne un volet de sélection de l'air de recyclage disposé à l'embranchement du conduit de dérivation 21 et du conduit de recyclage.

Le volet de sélection 26 et le volet de recyclage 22 sont actionnés par le même bouton de commande.

## Revendications

1. Dispositif de conditionnement de l'air d'un habitacle (3) de véhicule automobile, comportant un appareil (5) de conditionnement d'air installé à l'avant de la planche de bord (1), susceptible d'être alimenté en air extérieur et/ou en air de recyclage prélevé dans l'habitacle et transitant par un conduit de recyclage (9) disposé dans la planche de bord (1), et susceptible de délivrer un débit d'air conditionné dans un conduit de délivrance (18) d'air reliant ledit appareil (5) à la zone arrière (19) de l'habitacle (3),
**caractérisé par le fait qu'**il est prévu dans la planche de bord (1) un conduit de dérivation (21) reliant ledit conduit de recyclage (9) audit conduit de délivrance (18), ledit conduit de dérivation (21) partageant le conduit de délivrance (18) en une portion amont (18a) située entre l'appareil (5) et l'embranchement (23) du conduit de dérivation (21) et en une portion aval (18b) située entre ledit embranchement (23) et la bouche de délivrance, et dans ledit embranchement (23) un volet (22) de recyclage arrière susceptible de prendre au moins deux positions, une première position (P1) dans laquelle il obture l'entrée (24) du conduit de dérivation (21) et une deuxième position (P2) dans laquelle il obture la sortie (25) de la portion amont (18a) du conduit de délivrance (18), afin de permettre un prélèvement d'air dans la zone arrière (19) de l'habitacle (3) pour recyclage.

2. Dispositif selon la revendication 1, **caractérisé par le fait que** le volet (22) de recyclage arrière peut prendre une troisième position (P3) dans laquelle il met la portion amont (18a) en communication avec le conduit de dérivation (21).
